# EUROPÄISCHE PATENTSCHRIFT

(11) **EP 4 043 176 B1**
(45) Veröffentlichungstag und Bekanntmachung des Hinweises auf die Patenterteilung: **18.09.2024**
(21) Anmeldenummer: 22156784.5
(22) Anmeldetag: 15.02.2022
(51) Int. Cl.: B29C 45/14, B60R 13/02

(54) **VERFAHREN ZUR HERSTELLUNG EINES DEKORTEILS FÜR EINEN FAHRZEUGINNENRAUM**
METHOD FOR MANUFACTURING A DECORATIVE PART FOR A VEHICLE INTERIOR
PROCÉDÉ DE FABRICATION D'UNE PIÈCE DÉCORATIVE POUR UN HABITACLE DE VÉHICULE

(30) Priorität: 16.02.2021 DE 102021103599
(43) Veröffentlichungstag der Anmeldung: 17.08.2022
(73) Patentinhaber: Novem Car Interior Design GmbH, 95519 Vorbach (DE)
(72) Erfinder: WEIH, Philipp, 95473 Haag (DE); KARL, Andreas, 92676 Speinshart (DE)
(74) Vertreter: Schlögl, Markus

(56) Entgegenhaltungen:
- DE-A1- 102012 110 161
- DE-A1- 102014 006 567

## Beschreibung

Die Erfindung betrifft ein Verfahren zum Herstellen eines Dekorteils für einen Fahrzeuginnenraum. Das herzustellende Dekorteil umfasst einen Träger und eine auf dem Träger aufgebrachte Dekorschicht, wobei eine dem Träger gegenüberliegende Vorderseite der Dekorschicht eine Sichtseite des Dekorteils ausbildet.

Generell besteht bei der Gestaltung von Fahrzeuginnenräumen der Wunsch nach nahtlosen, gleichmäßigen Designoberflächen. Gewünscht ist somit eine Funktionsintegration erforderlicher Bedien- und/oder Anzeige- und/oder Beleuchtungselemente sowie sonstiger Bauteile in die Dekorteile. Die Sichtseite der Dekorteile soll somit beispielsweise Betätigungs- und/oder Informations- und/oder Beleuchtungsfunktionen integrieren und dadurch eigenständige Bauteile für diese Funktionen ersetzen. Um dem Wunsch nach nahtlosen, gleichmäßigen Designoberflächen nachzukommen, besteht die Anforderung, diese in die Dekorteile integrierten Funktionen derart auszubilden, dass sie bei Nichtnutzung nicht sichtbar sind, das heißt bei Nichtnutzung soll für den Betrachter an der Sichtseite der Dekorteile eine nahtlose, gleichmäßige Designoberfläche sichtbar sein. Funktionen bzw. Funktionskomponenten sollen nur im Nutzungsfall, also im aktiven Zustand, sichtbar sein. Im inaktiven Zustand hingegen sollen Funktionen bzw. Funktionskomponenten, beispielsweise Schalter, Knöpfe und Displays, nicht sichtbar sein. Die Sichtseite des Dekorteils wird in diesem Fall von diesen nicht unterbrochen, das Design erscheint für den Betrachter nahtlos, durchgängig und gleichmäßig.

Beispielsweise ist die Integration von Displays in Dekorteile für den Fahrzeuginnenraum bekannt. Diese Displays weisen ein Anzeigefeld auf, das in die Sichtseite des Dekorteils integriert ist und somit im unbenutzten Zustand als schwarze bzw. dunkle Fläche erscheint. Diese schwarzen bzw. dunklen Flächen setzen sich vom sonstigen Design der Dekorteile ab und werden als unschön empfunden. Daher besteht der Wunsch, dass das Display bzw. das Anzeigefeld des Displays an der Sichtseite des Dekorteils nur dann sichtbar ist, wenn das Display eingeschaltet ist und auf dem Anzeigefeld eine Anzeige dargestellt wird.

Zum Stand der Technik wird verwiesen auf DE 10 2014 006 567 A1, DE 10 2012 110 161 A1, DE 10 2018 207 296 A1 und DE 43 01 444 A1.

Der Erfindung liegt die Aufgabe zugrunde, ein neues Verfahren zur Herstellung von Zierteilen anzugeben, insbesondere ein Verfahren zum Herstellen von Zierteilen, die den vorstehend genannten Anforderungen entsprechen. Vorzugsweise soll das Verfahren eine einfache und/oder kostengünstige Herstellung der Dekorteile ermöglichen.

Diese Aufgabe wird gelöst durch ein Verfahren mit den Merkmalen des Anspruchs 1. Vorteilhafte Ausgestaltungen und Weiterbildungen sind in den abhängigen Ansprüchen angegeben.

Das erfindungsgemäße Verfahren ist zum Herstellen eines Dekorteils für einen Fahrzeuginnenraum vorgesehen, wobei das Dekorteil einen Träger und eine auf dem Träger aufgebrachte Dekorschicht umfasst, wobei eine dem Träger gegenüberliegende Vorderseite der Dekorschicht eine Sichtseite des Dekorteils ausbildet.

Das erfindungsgemäße Verfahren umfasst die Schritte:
a) Bereitstellen einer Trägerfolie, wobei die bereitgestellte Trägerfolie eine Heißprägefolie und/oder IMD-Folie ist,
b) Bildung eines Lagenverbunds durch Aufbringen einer Dekorlage auf einer ersten Seite der Trägerfolie,
c) Mikroperforieren der Dekorlage in einem oder mehreren Bereichen oder vollflächig,
d) Einlegen oder Einziehen des Lagenverbunds aus Trägerfolie und mikroperforierter Dekorlage in eine Kavität eines Spritzgießwerkzeugs derart, dass beim Einspritzen von Kunstsoff in die Kavität die Dekorlage des Lagenverbunds hinterspritzt und hierbei eine der ersten Seite gegenüberliegende zweite Seite der Trägerfolie gegen eine Wandung der Kavität gedrückt wird,
e) Schließen der Kavität und Einspritzen von Kunststoff in die Kavität zur Ausbildung des Trägers des Dekorteils, wobei die Dekorlage hinterspritzt wird und dabei die Dekorlage bei der Trägerausbildung in der Kavität auf eine der Dekorlage zugewandte Oberfläche des Trägers aufgebracht wird und dadurch die Dekorschicht des Dekorteils ausbildet,
f) Öffnen der Kavität und Entnehmen oder Auswerfen des Dekorteils.

Aufgrund des Drucks des in Schritt e) eingespritzten Kunststoffs wird die Trägerfolie gegen die Wandung der Kavität gedrückt. Die Dekorlage, beispielsweise eine Lackschicht, verbindet sich hierbei aufgrund der Temperatur und/oder des Drucks des eingespritzten Kunststoffs mit diesem Kunststoff. Gleichzeitig kann sich die Dekorlage von der Trägerfolie lösen, dies ist allerdings nicht zwingend.

Unter Mikroperforierung wird die Einbringung einer Vielzahl von durchgehenden Löchern in die Dekorlage verstanden. Im Bereich der Löcher ist die Dekorlage entfernt. Die Querschnittsabmessungen dieser Löcher liegen beispielsweise im Bereich von 50 bis 150 µm, beispielsweise bei 90 µm. Alle Löcher können gleichmäßig über den Bereich der Mikroperforierung verteilt sein. In diesem Fall ist die Löcherdichte konstant. Auch können alle Löcher die gleiche Querschnittsform und die gleichen Abmessungen aufweisen. Als Querschnittsform kommt beispielsweise ein Kreis in Betracht. Somit könnten beispielsweise kreisförmige Löcher gleichmäßig im Bereich der Mikroperforation der Dekorlage verteilt sein. Die Lochdurchmesser sind vorzugsweise so gewählt, dass die Löcher an der Sichtseite für einen Betrachter bei normaler Betrachtung ohne Hilfsmittel ohne Hinterleuchtung nicht sichtbar sind, das heißt der Betrachter sieht lediglich das einheitliche, durchgängige, nahtlose Design. Erst bei Hinterleuchtung der Löcher wird eine Unterbrechung im Design, beispielsweise durch eine Anzeige eines Displays, sichtbar. Bei einem typischen Lochdurchmesser im Bereich von 50 bis 150 µm liegt der Lochabstand typischerweise im Bereich von 60 bis 160 µm. Somit weist eine derartige Mikroperforation eine Auflösung im Bereich von 423 bis 159 dpi auf. Bei einem Lochabstand von 100 µm liegt die Auflösung bei 254 dpi. Möglich sind auch kleinere Lochdurchmesser im Bereich von unter 50 µm, beispielsweise im Bereich von 10 bis 50 µm. In diesem Fall kann der Lochabstand beispielsweise zwischen 12 und 60 µm und die Auflösung im Bereich von 2117 bis 423 dpi liegen.

Auf Schritt f) kann direkt oder gegebenenfalls nach weiteren Zwischenschritten Schritt g) folgen, der vorsieht: Entfernern der Trägerfolie beim Entnehmen oder Auswerfen oder nach dem Entnehmen oder Auswerfen des Dekorteils aus der Kavität, wobei die Dekorlage als Dekorschicht auf dem Träger verbleibt. Alternativ kann die Trägerfolie allerdings auch am Dekorteil verbleiben.

Die Trägerfolie kann bei Vorsehen des vorgenannten Schritts g) im erfindungsgemäßen Verfahren auch eine Endlosfolie sein, auf der die Dekorlage vollflächig oder bereichsweise aufgebracht wird. Ein mit der Dekorlage versehener Bereich der Trägerfolie wird in diesem Fall in Schritt d) in die Kavität eingezogen, beispielsweise mittels eines automatischen Vorschubs. In Schritt g) löst sich die Trägerfolie beim Entnehmen oder Auswerfen des Dekorteils von der nunmehr erzeugten Dekorschicht. Der nunmehr von der Dekorlage befreite Bereich der Trägerfolie wird aus der Kavität herausgefahren und gleichzeitig gelangt entsprechend Schritt d) ein weiterer, mit einer Dekorlage versehener Bereich der Trägerfolie in die Kavität, so dass nach dem Entnehmen oder Auswerfen des Dekorteils aus der Kavität erneut die Schritte e) und f) und g) durchgeführt werden können. Dieser Ablauf kann vielfach wiederholt werden, insbesondere automatisiert.

Es ist auch möglich, in Schritt d) einzelne mit der mikroperforierten Dekorlage versehene Trägerfolien in die Kavität einzulegen und gemäß Schritt e) zu hinterspritzen. Die Trägerfolie kann in diesem Fall auch nach dem Auswerfen am Dekorteil verbleiben. Es ist aber auch möglich, die Trägerfolie nach dem Entnehmen bzw. Auswerfen des Dekorteils gemäß vorgenanntem Schritt g) zu entfernen. Auch dieser Ablauf kann automatisiert werden.

Die vorstehenden Ausführungen zeigen, dass die Herstellung der Mikroperforation in der Dekorlage vor deren Aufbringung auf den Träger einen einfachen, effizienten und damit kostengünstigen Verfahrensablauf bei der Herstellung der Dekorteile ermöglicht.

Die gemäß der Erfindung vorgesehene Aufbringung der Dekorschicht auf den Träger mittels Übertragung der auf einer Trägerfolie aufgebrachten Dekorlage ermöglicht die Vorbereitung der Dekorlage und damit der Dekorschicht vor dem eigentlichen Aufbringen. Noch auf der Trägerfolie wird die Dekorlage mikroperforiert. Da die Löcher der Mikroperforation durchgehende Löcher sind, könnte deren Einbringung auf dem Träger zu dessen Beschädigung führen, beispielsweise durch eine zur Ausbildung der Löcher verwendete Laserstrahlung, die zu einer Trübung des Trägers führen könnte. Beim Mikroperforieren der Dekorlage auf der Trägerfolie wird gegebenenfalls lediglich die Trägerfolie beschädigt, die für das herzustellende Dekorteil nicht benötigt und daher ohnehin entfernt wird.

Von Vorteil ist auch der Verschwindeeffekt, das heißt die Unsichtbarkeit der Löcher der Mikroperforation für einen Betrachter, wenn die Löcher nicht hinterleuchtet werden. Für einen Betrachter erscheint die Sichtseite des Dekorteils in diesem Fall als nahtlose, gleichmäßige und durchgängige Designoberflächen ohne Störstellen. Bei Hinterleuchtung werden allerdings in das Dekorteil integrierte Betätigungs- und/oder Informations- und/oder Beleuchtungsfunktionen sichtbar. Diese können somit eigenständige Bauteile für diese Funktionen ersetzen.

Eine Weiterbildung sieht vor, dass der in Schritt e) eingespritzte Kunststoff ein transparenter Kunststoff und der ausgebildete Träger ein transparenter Träger ist. Dadurch entsteht ein Dekorteil mit vergleichsweise hoher Transmission. Eine Eintrübung oder sonstige Beschädigung des transparenten Trägers beim Einbringen der Mikroperforation ist bei dem erfindungsgemäßen Verfahren ausgeschlossen, da die Mikroperforation bereits vor der Aufbringung der Dekorschicht auf den Träger in der hierfür vorbereiteten Dekorlage auf der Trägerfolie hergestellt und erst anschließend auf den Träger transferiert wird. Dadurch wird eine schlechte Durchleuchtung und/oder eine Veränderung der Farbwiedergabe, wie sie bei Herstellung der Mikroperforation in einer bereits auf den Träger aufgebrachten Dekorschicht entstehen kann, ausgeschlossen.

Gemäß einer Ausgestaltung der Erfindung weist das herzustellende Dekorteil ein Display auf. Das Display wird, beispielsweise nach Schritt f) oder Schritt g), an einer der Dekorschicht gegenüberliegenden Rückseite des Trägers und/oder in eine Ausnehmung im Träger angebracht. Die Anbringung erfolgt derart, dass ein Anzeigefeld des Displays der Dekorschicht zugewandt ist und damit eine von dem Anzeigefeld erzeugte Anzeige durch die Mikroperforation der Dekor-schicht hindurch an der Sichtseite des Dekorteils sichtbar ist.

Ein Betrachter kann somit an der Sichtseite des Dekorteils eine von dem Anzeigefeld erzeugte Anzeige erkennen. Zu sehen ist die Anzeige jedenfalls, wenn der Betrachtungswinkel bei 90° liegt, das heißt ein Betrachter des Dekorteils blickt senkrecht auf die Vorderseite des Dekorteils und damit parallel zur Erstreckung der Löcher der Mikroperforation durch die Dekorschicht.

Bei einem schrägen Blickwinkel, also einem Winkel zwischen 0° (parallel zur Vorderseite des Dekorteils) und 90° (senkrecht auf die Vorderseite des Dekorteils), ist die Sichtbarkeit abhängig von der Dicke der Dekorschicht und den Querschnittsabmessungen der Löcher, also bei kreisförmigen Löchern vom Durchmesser der Löcher. Je dünner die Dekorschicht bei gleichbleibenden Querschnittsabmessungen, desto kleiner ist der Betrachtungswinkel, unter dem die Anzeige für den Betrachter noch sichtbar ist. Ferner gilt: Je grö-ßer die Querschnittsabmessungen bei gleichbleibender Dicke der Dekorschicht, desto kleiner ist der Betrachtungswinkel, unter dem die Anzeige für den Betrachter noch sichtbar ist. Um jedoch eine hohe Auflösung der sichtbaren Anzeige zu erhalten, müssen die Löcher der Mikroperforierung möglichst klein gewählt werden. Somit bestimmt bei vorgegebenem Lochdurchmesser die Dicke der Dekorschicht den möglichen schrägen Betrachtungswinkel. Es sind ausgehend von der senkrechten Betrachtung bei einem Betrachtungswinkel von 90° umso kleiner Betrachtungswinkel und somit umso schrägere Betrachtungen der Anzeige möglich, je dünner die Dekorschicht ist. Das erfindungsgemäße Verfahren ermöglicht somit Dekorteile mit Mikroperforationen, die die Anzeigeflächen von Displays überdecken, wobei die von dem Display dargestellte Anzeige eine vergleichsweise geringe Blickwinkelabhängigkeit aufweist, das heißt ausgehend von einem senkrechten Blickwinkel auf die Vorderseite der Dekorschicht ist die Anzeige auch noch bis hin zu kleinen Blickwinkeln sichtbar. Dadurch ist die Anzeige im Fahrzeuginnenraum für Betrachter an unterschiedlichen Positionen sichtbar bzw. ablesbar. Durch entsprechende Wahl des Verhältnisses von Dicke der Dekorlage bzw. Dekorschicht einerseits und Durchmesser der Löcher der Dekorlage bzw. Dekorschicht andererseits lässt sich diese Sichtbarkeit, das heißt der minimale Blickwinkel bzw. die stärkste Abweichung aus der Senkrechten, unter dem bzw. der die Anzeige noch sichtbar bzw. ablesbar ist, einstellen.

Ein weiterer Vorteil des erfindungsgemäßen Verfahrens ergibt sich aus der Vorabherstellung der Löcher der Mikroperforation noch auf der Trägerfolie. Die Kanten der Löcher sind an den Lochenden an der dem Träger zugewandten Seite und/oder an der der Sichtseite zugewandten Seite vergleichsweise mit hoher Kantenschärfe ausgebildet. Dadurch ergibt sich eine vergleichsweise präzise und gleichmäßige Darstellung bzw. Sichtbarkeit der Anzeige für den Betrachter.

Ein weiterer Vorteil der mit dem erfindungsgemäßen Verfahren hergestellten Mikroperforation in der Dekorschicht in Verbindung mit Displays ist die sehr gute Wiedergabe von Helligkeit und Farbort der durch die Mikroperforation sichtbaren Anzeige.

Die Herstellung der Mikroperforation bereits in der Dekorlage auf der Trägerfolie und die damit verbundene Vermeidung von Eintrübungen und/oder Veränderungen der Farbwiedergabe im transparenten Träger hat hinsichtlich der Displays den Vorteil, dass günstigere Displaytechnologien mit geringerer Leuchtstärke eingesetzt werden können. Auch können aufgrund der geringeren erforderlichen Leuchtstärke Kühlkörper entfallen oder geringer dimensioniert werden.

Als Displays kommen unterschiedliche Bauarten in Betracht, beispielsweise LCDs oder LED-Displays oder PLED-Displays.

Gemäß einer Ausgestaltung dringt in Schritt e) der Kunststoff beim Einspritzen in die in Schritt d) hergestellte Mikroperforation ein und die Mikroperforation wird teilweise oder vollständig mit dem eingespritzten Kunststoff gefüllt.

Bei dem eingespritzten Kunststoff kann es sich um Polyurethan PUR und/oder Polycarbonat PC handeln oder der eingespritzte Kunststoff umfasst Polyurethan PUR und/oder Polycarbonat PC.

Das Mikroperforieren der Dekorlage, das heißt das Einbringen der Löcher in die Dekorlage, in Schritt c) kann beispielsweise durch Lasern erfolgen. Dadurch kann zwar die Trägerfolie beschädigt werden. Da diese aber ohnehin vom Dekorteil abgezogen wird, ist dies unschädlich. Bei einer Ausbildung der Mikroperforation in die bereits auf dem Träger aufgebrachte Dekorschicht hingegen könnte sich nachteilig auf den Träger auswirken, beispielsweise durch Trübungen und/oder Farbveränderungen.

Die Heißprägefolie und/oder IMD-Folie ist eine für das als In-Mould Decoration, abgekürzt IMD, bezeichnete Verfahren geeignete Folie. Schritt e) kann somit eine Heißprägung darstellen, bei der die Dekorschicht durch Hitze und/oder Druck von der Trägerfolie auf den Träger bei dessen Herstellung übertragen wird.

Die Trägerfolie hat beispielsweise eine Dicke in der Größenordnung von etwa 200 µm.

Die in Schritt b) aufgebrachte Dekorlage kann eine Lackschicht und/oder Farbschicht sein.

Die Dekorlage kann beispielsweise mittels eines Druckverfahrens auf die Trägerfolie aufgebracht werden.

Eine Variante des Verfahrens sieht vor, dass an der Vorderseite der Dekorschicht eine Schutz- und/oder Optikschicht aufgebracht wird, insbesondere nach Schritt f) oder nach Schritt g). Die Schutz- und/oder Optikschicht kann PUR und/oder ein thermoplastisches Material umfassen oder aus PUR und/oder einem thermoplastischen Material gebildet werden.

Als Zwischenschritte oder auch nach den beschriebenen Verfahrensschritten können sich an sich bekannte Verfahrensschritte zur finalen Behandlung der Formteile erfolgen, beispielsweise Schneid- und/oder Fräs- und/oder Schleifschritte.

## Patentansprüche

1. Verfahren zum Herstellen eines Dekorteils für einen Fahrzeuginnenraum,
wobei das Dekorteil einen Träger und eine auf dem Träger aufgebrachte Dekorschicht umfasst, wobei eine dem Träger gegenüberliegende Vorderseite der Dekorschicht eine Sichtseite des Dekorteils ausbildet,
wobei das Verfahren die Schritte umfasst:
a) Bereitstellen einer Trägerfolie, wobei die bereitgestellte Trägerfolie eine Heißprägefolie und/oder IMD-Folie ist,
b) Bildung eines Lagenverbunds durch Aufbringen einer Dekorlage auf einer ersten Seite der Trägerfolie,
c) Mikroperforieren der Dekorlage in einem oder mehreren Bereichen oder vollflächig, wobei das Mikroperforieren der Dekorlage durch Lasern erfolgt,
d) Einlegen oder Einziehen des Lagenverbunds aus Trägerfolie und mikroperforierter Dekorlage in eine Kavität eines Spritzgießwerkzeugs derart, dass beim Einspritzen von Kunstsoff in die Kavität die Dekorlage des Lagenverbunds hinterspritzt und hierbei eine der ersten Seite gegenüberliegende zweite Seite der Trägerfolie gegen eine Wandung der Kavität gedrückt wird,
e) Schließen der Kavität und Einspritzen von Kunststoff in die Kavität zur Ausbildung des Trägers des Dekorteils, wobei die Dekorlage hinterspritzt wird und dabei die Dekorlage bei der Trägerausbildung in der Kavität auf eine der Dekorlage zugewandte Oberfläche des Trägers aufgebracht wird und dadurch die Dekorschicht des Dekorteils ausbildet,
f) Öffnen der Kavität und Entnehmen oder Auswerfen des Dekorteils.

2. Verfahren nach Anspruch 1,
**dadurch gekennzeichnet, dass**
auf Schritt f) folgender Schritt folgt:
g) Entfernern der Trägerfolie beim Entnehmen oder Auswerfen oder nach dem Entnehmen oder Auswerfen des Dekorteils aus der Kavität, wobei die Dekorlage als Dekorschicht auf dem Träger verbleibt.

3. Verfahren nach Anspruch 1 oder 2,
**dadurch gekennzeichnet, dass**
der in Schritt e) eingespritzte Kunststoff ein transparenter Kunststoff und der ausgebildete Träger ein transparenter Träger ist

4. Verfahren nach Anspruch 3,
**dadurch gekennzeichnet, dass**
das herzustellende Dekorteil ein Display aufweist,
wobei das Display an einer der Dekorschicht gegenüberliegenden Rückseite des Trägers und/oder in eine Ausnehmung im Träger angebracht wird,
wobei die Anbringung derart erfolgt, dass ein Anzeigefeld des Displays der Dekorschicht zugewandt ist und damit eine von dem Anzeigefeld erzeugte Anzeige durch die Mikroperforation der Dekorschicht hindurch an der Sichtseite des Dekorteils sichtbar ist.

5. Verfahren nach einem der vorhergehenden Ansprüche,
**dadurch gekennzeichnet, dass**
in Schritt e) der Kunststoff beim Einspritzen in die in Schritt d) hergestellte Mikroperforation eindringt und die Mikroperforation teilweise oder vollständig mit dem eingespritzten Kunststoff gefüllt wird.

6. Verfahren nach einem der vorhergehenden Ansprüche,
**dadurch gekennzeichnet, dass**
der eingespritzte Kunststoff Polyurethan PUR und/oder Polycarbonat PC ist oder umfasst.

7. Verfahren nach einem der vorhergehenden Ansprüche, **dadurch gekennzeichnet, dass** die in Schritt b) aufgebrachte Dekorlage eine Lackschicht und/oder Farbschicht ist.

8. Verfahren nach einem der vorhergehenden Ansprüche, **dadurch gekennzeichnet, dass** an der Vorderseite der Dekorschicht eine Schutz-und/oder Optikschicht aufgebracht wird.

## Claims

1. Method of manufacturing a decorative part for a vehicle interior, wherein the decorative part comprises a carrier and a decorative layer applied to the carrier, wherein a front side of the decorative layer opposite the carrier forms a visible side of the decorative part, wherein the method comprises the steps of
a) Providing a carrier film, wherein the carrier foil provided is a hot stamping film and/or IMD film,
b) Formation of a laminate by applying a decorative layer to a first side of the carrier film,
c) Microperforation of the decorative layer in one or more areas or over the entire surface, whereby the microperforation of the decorative layer is carried out by laser,
d) Insertion or drawing-in of the laminate consisting of carrier film and microperforated decorative layer into a cavity of an injection mould in such a way that, when plastic is injected into the cavity, the decorative layer of the laminate is back-injected and a second side of the carrier film opposite the first side is pressed against a wall of the cavity,
e) Closing the cavity and injecting plastic into the cavity to form the carrier of the decorative part, whereby the decorative layer is back-injected and the decorative layer is applied to a surface of the carrier facing the decorative layer during the carrier formation in the cavity, thereby forming the decorative layer of the decorative part,
f) Opening the cavity and removing or ejecting the decorative part.

2. Method according to claim 1,
**characterised in that**
the following step follows step f):
g) Removal of the carrier film during removal or ejection or after removal or ejection of the decorative part from the cavity, whereby the decorative layer remains on the carrier as a decorative layer.

3. Method according to claim 1 or 2,
**characterised in that**
the plastic injected in step e) is a transparent plastic and the moulded carrier is a transparent carrier.

4. Method according to claim 3,
**characterised in that**
the decorative part to be produced has a display,
whereby the display is attached to a rear side of the carrier opposite the decorative layer and/or in a recess in the carrier,
whereby the attachment is carried out in such a way that a display field of the display faces the decorative layer and thus a display generated by the display field is visible through the microperforation of the decorative layer on the visible side of the decorative part.

5. Method according to one of the preceding claims,
**characterised in that**
in step e), the plastic penetrates into the microperforation produced in step d) during injection and the microperforation is partially or completely filled with the injected plastic.

6. Method according to one of the preceding claims,
**characterised in that**
the injected plastic is or comprises polyurethane PUR and/or polycarbonate PC.

7. Method according to one of the preceding claims,
**characterised in that**
the decorative layer applied in step b) is a lacquer layer and/or colour layer.

8. Method according to one of the preceding claims,
**characterised in that**
a protective and/or optical layer is applied to the front of the decorative layer.

## Revendications

1. Procédé de fabrication d'un élément décoratif pour un habitacle de véhicule,
la pièce de décoration comprenant un support et une couche de décoration appliquée sur le support, une face avant de la couche de décoration opposée au support formant une face visible de la pièce de décoration,
le procédé comprenant les étapes consistant à
a) fournir une feuille de support, la feuille de support fournie étant une feuille de marquage à chaud et/ou une feuille IMD,
b) Formation d'un assemblage de couches par application d'une couche décorative sur une première face du feuille support,
c) microperforation de la couche décorative dans une ou plusieurs zones ou sur toute la surface, la microperforation de la couche décorative étant réalisée par laser,
d) Insertion ou introduction du composite de couches constitué d'une feuille de support et d'une couche décorative microperforée dans une cavité d'un outil de moulage par injection de telle sorte que, lors de l'injection de matière plastique dans la cavité, la couche décorative du composite de couches est injectée par l'arrière et, ce faisant, une deuxième face de la feuille de support opposée à la première face est pressée contre une paroi de la cavité,
e) Fermeture de la cavité et injection de matière plastique dans la cavité pour former le support de la pièce décorative, la couche décorative étant injectée par l'arrière et la couche décorative étant alors appliquée lors de la formation du support dans la cavité sur une surface du support orientée vers la couche décorative et formant ainsi la couche décorative de la pièce décorative,
f) Ouverture de la cavité et retrait ou éjection de la pièce décorative.

2. Procédé selon la revendication 1,
**caractérisé en ce que**
l'étape f) est suivie de l'étape suivante:
g) l'enlèvement de la feuille de support lors du retrait ou de l'éjection ou après le retrait ou l'éjection de la pièce décorative de la cavité, la couche décorative restant sur le support en tant que couche décorative.

3. Procédé selon la revendication 1 ou 2,
**caractérisé en ce que**
la matière plastique injectée à l'étape e) est une matière plastique transparente et le support formé est un support transparent.

4. Procédé selon la revendication 3,
**caractérisé en ce que**
la pièce décorative à fabriquer comporte un présentoir,
l'écran étant monté sur une face arrière du support opposée à la couche décorative et/ou dans un évidement du support,
l'application étant telle qu'un champ d'affichage de l'écran est tourné vers la couche décorative et qu'ainsi un affichage généré par le champ d'affichage est visible à travers la microperforation de la couche décorative sur le côté visible de la partie décorative.

5. Procédé selon l'une quelconque des revendications précédentes, **caractérisé en ce que**
à l'étape e), la matière plastique pénètre, lors de l'injection, dans la microperforation réalisée à l'étape d) et la microperforation est partiellement ou totalement remplie par la matière plastique injectée.

6. Procédé selon l'une quelconque des revendications précédentes, **caractérisé en ce que**
la matière plastique injectée est ou comprend du polyuréthane PUR et/ou du polycarbonate PC.

7. Procédé selon l'une quelconque des revendications précédentes, **caractérisé en ce que**
la couche décorative appliquée à l'étape b) est une couche de vernis et/ou une couche de peinture.

8. Procédé selon l'une quelconque des revendications précédentes, **caractérisé en ce que**
une couche de protection et/ou une couche optique est appliquée sur la face avant de la couche décorative.
